# EUROPÄISCHE PATENTSCHRIFT

(11) **EP 0 582 219 B1**
(45) Veröffentlichungstag und Bekanntmachung des Hinweises auf die Patenterteilung: **26.11.1997**
(21) Anmeldenummer: 93112153.7
(22) Anmeldetag: 29.07.1993
(51) Int. Cl.: C08L 95/00

(54) **Modifizierte Bitumen, Verfahren zu ihrer Herstellung, ihre Verwendung sowie Löslichkeitsvermittler für plastifiziertes Polyvinylbutyral in Bitumen**
Modified bitumens, process for their production, their use and solubility enhancers for plastified polyvinylbutyral in bitumen
Bitumes modifiés, procédé de leur production, leur utilisation et des promoteurs de solubilité pour polyvinylbutyral dans le bitumen

(30) Priorität: 06.08.1992 DE 4226000
(43) Veröffentlichungstag der Anmeldung: 09.02.1994
(73) Patentinhaber: Clariant GmbH, 65929 Frankfurt am Main (DE)
(72) Erfinder: Küchler, Mannfred, D-61440 Oberursel (DE); Mucha, Bernd Dr., D-61267 Neu-Anspach (DE)

(56) Entgegenhaltungen:
- US-A- 3 332 799
- US-A- 4 235 953

## Beschreibung

Die Erfindung betrifft Löslichkeitsvermittler für plastifiziertes Polyvinylbutyral (PVB) in Bitumen zur Herstellung von homogenen bituminösen Mischungen, wobei als Löslichkeitsvermittler Dialkyl-mono-, -oligo- und -polyalkylenglykoläther, gegebenenfalls in Kombination mit Polystyrol, verwendet werden und modifiziertes Bitumen mit verbesserten Elastizitätseigenschaften und verbesserter Kälteflexibilität erhalten werden kann.

Aus den US-PS-en 4 246 674 und 4 277 533 ist die Herstellung von elastischen, wasserfesten Dachdichtungsbahnen aus homogenen Mischungen von Steinkohlenteerpech und plastifiziertem Polyvinylbutyral (PVB) bekannt. Dazu werden geschmolzenes Steinkohlenteerpech und bis zu 60 Gew.-%, bezogen auf die resultierende homogene Mischung, plastifiziertes PVB bei Temperaturen zwischen 175 und 200 °C in einem Zwangsmischer ohne Löslichkeitsvermittler miteinander vermischt, bis sie eine homogene flüssige Masse bilden, anschließend auf ein Gummiförderband unter Formung einer 1 mm dicken Gießfolie gegeben, letztere auf Raumtemperatur abgekühlt und von der Gummiunterlage abgezogen.

Versuche zur analogen elastifizierenden Modifizierung von Bitumen, wie es bei der Aufarbeitung von Erdöl in großen Mengen anfällt und u.a. bei der Herstellung von Straßenbaumaterialien als Bindemittel verwendet wird, sind demgegenüber erfolglos geblieben, da sich plastifiziertes PVB mit geschmolzenem Bitumen nicht homogen vermischen läßt, sondern lediglich heterogene, stippenreiche, unbrauchbare Gemische bildet. Auch die Verwendung von weichmacherfreiem PVB ergibt keine brauchbaren homogenen Mischungen mit Bitumen. Andererseits lassen das thermoplastische und zähelastische Verhalten, die gute UV-Lichtbeständigkeit und Oxidationsbeständigkeit von plastifiziertem PVB dieses als Elastifizierungskomponente für Bitumen unverändert interessant erscheinen, wozu jedoch u.a. dessen vollständige homogene Mischbarkeit mit Bitumen erforderlich ist.

Als Bitumen bezeichnet man bekanntlich nach DIN 55 946 die bei der schonenden destillativen Aufarbeitung von Erdölen aus den Destillationsrückständen gewonnenen dunkelfarbigen, halbfesten bis springharten, schmelzbaren, hochmolekularen Kohlenwasserstoffgemische sowie die in Schwefelkohlenstoff löslichen Anteile von natürlichen Asphalten oder von Erdwachs oder von Montanwachs.

Diese Produkte haben vielfältige technische Anwendungen gefunden, wobei die Verwendungen als Bindemittel in Straßenbaumaterialien sowie als Isoliermaterial gegen wäßrige Medien die mengenmäßig weitaus wichtigsten darstellen. Von besonderer Bedeutung sind hierbei die sog. Normbitumen nach DIN 1995, mit Penetrationswerten z.B. für sog. Destillationsbitumen der Typen B 15 bis B 300 bei 25 °C von 10 bis 320 [1/10 mm] als Eigenschaftskennwert, wobei der Penetrationswert mit der Dimension [1/10 mm] als die Eindringtiefe einer Standardnadel mit 100 g Belastung nach 15 Sekunden in das Bitumen bei einer bestimmten Temperatur, gemessen mittels eines Penetrometers, als die Anzahl von 1/10 mm-Eindringtiefe-Einheiten [= Penetration] definiert ist.

Neben der Penetration wird üblicherweise als weiterer Kennwert meist der Erweichungspunkt des Bitumens in [°C] angegeben. Es ist dies die z.B. nach dem Ring- und Kugel-Verfahren (RuK) ermittelte Temperatur, bei der eine genormte Stahlkugel durch eine Bitumenschicht von genormter Dicke dringt. Die o.g. handelsüblichen Destillationsbitumentypen B 300 bis B 15 besitzen hiernach Erweichungspunkte im Bereich von 27 bis 72 °C. Die bevorzugt verwendeten Destillationsbitumentypen besitzen Erweichungspunkte nach RuK von vorzugs35 bis 75 °C und Penetrationen bei 25 °C von vorzugsweise 10 bis 210 [1/10 mm].

Aus weicheren Destillations-, Extraktions- und Crackrückstandsbitumentypen können durch Einwirkung von Luftsauerstoff bei ca. 200 bis 260 °C nach dem sog. Blasverfahren härtere und höherschmelzende Bitumina erhalten werden. Bei dem hierbei resultierenden sog. Blasbitumen nimmt mit wachsender Blasdauer die Penetration ab und der Erweichungspunkt steigt an. Eine Charakterisierung des Bitumens kann auch durch Angabe der Werte für den Erweichungspunkt nach RuK und die Penetration bei 25 °C als [RuK/Pen.]-Wert erfolgen.

Die bevorzugt verwendeten handelsüblichen Blasbitumentypen besitzen Erweichungspunkte nach RuK von vorzugsweise 80 bis 140 °C und eine Penetration bei 25 °C von vorzugsweise 3 bis 45 [1/10 mm].

Zur Verbesserung der Elastizität und der Kältebruchfestigkeit werden den Bitumen für manche Anwendungsgebiete bekanntlich Elastifizierungskomponenten zugesetzt. So enthält Straßenbaubitumen häufig 10 bis 20 Gew.-% eines relativ teueren Styrol-Butadien-Kautschuks (SBS-Kautschuk), und aus der DE-OS 39 17 815 ist die Verwendung von Polyalkyl(meth)acrylat als Zusatzkomponente zur Verbesserung der elastischen Rückstelleigenschaften und der Kälteflexibilität des Bitumens bekannt.

Der vorliegenden Erfindung lag somit die Aufgabe zugrunde, einen chemisch vorzugsweise inerten Löslichkeitsvermittler zu finden, der es ermöglicht, homogene Gemische aus Bitumen und plastifizierten Polyvinylbutyralen, vorzugsweise von Recyclingqualitäten der letzteren, herzustellen, die sowohl in geschmolzener als auch in erstarrter Form homogene, stippenfreie Phasen bilden und in erstarrter Form möglicherweise verbesserte Elastizitätseigenschaften und verbesserte Kälteflexibilitäten, vergleichsweise zu nichtmodifiziertem Bitumen, aufweisen.

Solchermaßen modifizierte Bitumina finden insbesondere Interesse für Anwendungen als Bindemittel in Straßenbaumaterialien, als Isoliermasse zur Herstellung von Pipelineröhrenummantelungen, sowie als Vergußmassen in der Elektrotechnik, auf dem Bausektor und im Straßen- und Brückenbau.

Es wurde nun überraschenderweise gefunden, daß sich die gestellte Aufgabe vorteilhaft lösen läßt, wenn man als Löslichkeitsvermittler Mono-, Oligo- oder Polyalkylenglykoldialkyläther, gegebenenfalls in Kombination mit Polystyrol als löslichkeitsvermittelnder Cokomponente, verwendet.

Als Mono-, Oligo- bzw. Polyalkylenglykoldialkyläther werden vorzugsweise Verbindungen der Formeln I oder II,

R¹O-(CH₂-[CH₂]_{z}-O)ₓR² (I)

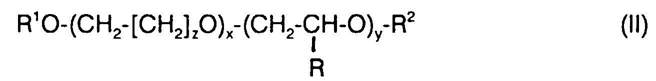

worin jeweils R¹ und R², die gleich oder verschieden sein können und vorzugsweise gleich sind, (C₁-C₄)-Alkyl, vorzugsweise Methyl oder Ethyl,
- R =: Methyl oder Ethyl, vorzugsweise Methyl,
- x =: jeweils eine Zahl von 1 bis 5000, vorzugsweise 3 bis 2500,
- y =: eine Zahl von 0 bis 500, vorzugsweise 1 bis 200, mit der Maßgabe, daß bei y-Werten von >0 der Wert von x = 0 oder vorzugsweise ≥4 y ist, und
- z =: eine Zahl von 1 bis 8, vorzugsweise 1 bis 3, insbesondere 1,
bedeuten,
oder Mischungen aus Verbindungen der Formeln I und II, vorzugsweise nur Verbindungen der Formel I, verwendet. Besonders bevorzugt sind Verbindungen der Formel I mit z = 1, x = 3 bis 10, insbesondere x = 4 bis 8.

Die erfindungsgemäß als Löslichkeitsvermittler verwendeten Mono-, Oligo- bzw. Polyalkylenglykoldialkyäther sind vorzugsweise mit Wasser mischbar.

Die Verbindungen der Formel II können bei y >0 die verschiedenen Alkylenoxideinheiten in statistischer Verteilung oder in Blöcken aus einheitlichen Alkylenoxideinheiten enthalten.

Bevorzugte Verbindungen der Formeln I und II sind solche mit Siedebereichen unter Normaldruck von > 150 °C, insbesondere ≥ 250 °C, so daß vorzugsweise Oligo- und Polyalkylenglykoldialkyläther, insbesondere Polyalkylenglykoldialkyläther der Formeln I oder II erfindungsgemäß als Löslichkeitsvermittler verwendet werden. Bevorzugte Löslichkeitsvermittler sind demnach z.B. Diethylenglykoldimethyläther,Triethlyenglykoldimethyläther,Tetraethylenglykoldimethyläther, Polyethylenglykoldimethyläther der Typen 200, 250, 500, 1000 und 2000, wobei die Zahlen 200 bis 2000 jeweils das Molekulargewicht der den Dimethyläthern zugrunde liegenden Polyethylenoxiddioleinheiten bedeuten, Diethylenglykoldibutyläther, Poly-ethylenglykol/propylenglykol-α,ω-di-(C₁-C₄)alkyläther. Besonders bevorzugt ist Tetraethylenglykoldimethyläther.

Unter der Bezeichnung Polystyrol werden gegebenenfalls vorzugsweise Styrolhomopolymerisate oder Styrolcopolymerisate von jeweils beliebiger makromolekularer Molekülgröße, bei den letzteren mit der Maßgabe, daß der Anteil der Styrol- und/oder gegebenenfalls der a-Methylstyrol-monomereinheiten in den copolymeren Makromolekülen > 70 Gew.-%, bezogen auf das Copolymerisat, beträgt, verwendet. Bevorzugt sind Polystyrole in fester Form oder deren Dispersionen oder Lösungen in einem Löslichkeitsvermittler der Formel I oder II, oder insbesondere in Form von festen homo- oder copolymeren Schaumpolystyrolen, wie sie üblicherweise für Verpackungs- und Isolierzwecke verwendet werden, beispielsweise ®Styropor, oder von Polystyrolhartschäumen, wie sie vorzugsweise als wasserunempfindliches Isoliermaterial auf dem Bausektor verwendet werden, beispielsweise ®Styrodur oder ®Roofmate. Besonders bevorzugt sind recyclingfähige Schaumpolystyrolqualitäten, wie sie aus verbrauchten Verpakkungs- und Isoliermaterialien und aus aufbereitetem Bauschutt in großen Mengen anfallen.

Die Mitverwendung von Polystyrol als löslichkeitsvermittelnde Cokomponente zusammen mit Löslichkeitsvermittlern der Formel I oder II ist erfindungsgemäß nicht zwingend erforderlich. Sie stellt aber eine vorteilhafte und bevorzugte Gegebenenfallsvariante der vorliegenden Erfindung dar und führt zu einer unerwarteten synergistischen Steigerung der Löslichkeitsvermittlung zwischen Bitumen und plastifiziertem PVB. Andererseits können sehr hohe Polystyrolanteile dazu führen, daß der durch homogenen Zusatz von plastifiziertem PVB erzielbare vorteilhafte Elastifizierungseffekt im Bitumen weitgehend verschwindet und bei alleiniger Verwendung von Polystyrol in der zur Löslichkeitsvermittlung für das eingesetzte plastifizierte PVB erforderlichen Menge das modifizierte Bitumen so hart und spröde wird, daß es seine vorteilhaften anwendungstechnischen Eigenschaften weitgehend verliert und technisch wertlos wird. Die an sich mögliche Herstellung solcher Mischungen aus Bitumen und plastifiziertem PVB unter alleiniger Verwendung von Polystyrol als Löslichkeitsvermittler erfordert zudem relativ langes und intensives Mischen und Kneten der Komponenten in der Bitumenschmelze, um eine homogene Gemischschmelze zu erhalten, aus der dann beim Abkühlen auf Normaltemperatur ein unelastischer Feststoff mit zusammensetzungsbedingter Härte- und Sprödigkeitscharakteristik resultiert.

Bei Verwendung erfindungsgemäßer Löslichkeitsvermittler der Formel I oder II unter Mitverwendung von Polystyrol als löslichkeitsvermittelnder Cokomponente kann, unter vergleichbaren Bedingungen, eine deutliche Verkürzung der Homogenisierungszeiten bis zur Bildung einer homogenen Gemischschmelze aus Bitumen und plastifiziertem PVB erzielt werden und es zeigt sich außerdem ein verbesserter löslichkeitsvermittelnder Effekt, der sich u.a. in einer gegebenenfalls überraschend niedrigeren Aufwandmenge an erforderlicher polystyrolbeteiligter Löslichkeitsvermittlerkombination, vergleichsweise zur alleinigen Verwendung von Löslichkeitsvermittlern der Formel I oder II, bei zumindest gleichguter Verbesserung der Elastizitätseigenschaften und der Kälteflexibilität des modifizierten Bitumens erkennen läßt. Die Mitverwendung von Polystyrol als löslichkeitsvermittelnde Cokomponente führt außerdem zu einer verstärkten Viskositätsabnahme in der modifizierten Bitumenschmelze und erleichtert deren Verarbeitbarkeit.

Die Einsatzmenge der erfindungsgemäßen Löslichkeitsvermittler bzw. Löslichkeitsvermittlerkombination in Mischungen aus Bitumen und plastifiziertem PVB ist nicht kritisch und kann in einem weiten Bereich variiert werden, wobei die jeweils erforderliche Mindestmenge durch einfaches Ausprobieren unschwer ermittelt werden kann. Die Einsatzmenge beträgt vorzugsweise 1 bis 30 Gew.-%, insbesondere 8 bis 25 Gew.-%, bezogen auf die Gesamtmenge des Gemisches aus Bitumen und plastifiziertem PVB, wobei als Löslichkeitsvermittler die verwendeten Mono-, Oligo- bzw. Polyalkylenglykoldialkyläther der Formel I oder 11 oder die Summe der verwendeten Komponenten aus Mono-, Oligo- bzw. Polyalkylenglykoldialkyläther der Formel I oder 11 und der Cokomponente Polystyrol zu verstehen sind.

Bitumen und plastifiziertes Polyvinylbutyral (PVB) lassen sich unter Mitverwendung wirksamer Mengen erfindungsgemäßer Löslichkeitsvermittler in beliebigen Mengenverhältnissen in der Schmelze homogen vermischen, vorzugsweise unter intensiver Durchmischung in einer üblichen Mischvorrichtung, beispielsweise einem beheizbaren Kneter oder einem beheizbaren Planetenmischer mit starker Scherkraftwirkung, bei Temperaturen im Bereich von vorzugsweise 150 bis 300 °C, insbesondere 200 bis 260 °C, besonders bevorzugt bei 250 °C.

Bevorzugt wird dem Bitumen plastifiziertes PVB in Mengen von 5 bis 60 Gew.-%, beispielsweise für die Verwendung des modifizierten Bitumens als Vergußmasse, Kabel- und Stahlrohrumhüllungen, besonders bevorzugt 15 bis 30 Gew.-%, beispielsweise für die Verwendung des modifizierten Bitumens als Bindemittel in Straßenbaumaterialien oder in Baustoffen zur Herstellung von elastischen Estrichen und Dämmschichten, zugesetzt, jeweils bezogen auf die Gesamtmenge aus Bitumen und plastifiziertem PVB, unter zusätzlicher Mitverwendung erfindungsgemäßer Löslichkeitsvermittler in der jeweils erforderlichen löslichkeitsvermittelnd wirksamen Menge.

Bei der Mitverwendung von löslichkeitsvermittelnden Kombinationen aus Mono-, Oligo- bzw. Polyalkylenglykoldialkyläthern der Formel I oder II und Polystyrol, vorzugsweise Schaumpolystyrol, kann die bei nur alleiniger Verwendung von Verbindungen der Formel I oder II erforderliche löslichkeitsvermittelnd wirksame Mindestaufwandmenge erheblich reduziert werden, da Kombinationen aus Formel 1 oder 11-Verbindungen und Polystyrol offensichtlich eine synergistische löslichkeitsvermittelnde Wirkungssteigerung entfalten können und dabei, vergleichsweise zu polystyrolfreien Mischungen, modifiziertes Bitumen mit besonders guten Elastizitäts- und Kälteflexibilitätseigenschaften erhalten werden kann und die Mitverwendung von Polystyrol außerdem eine Verkürzung der erforderlichen Mischungs- bzw. Homogenisierungsdauer bis zur Erzielung homogener Gemischschmelzen, die außerdem eine stärker erniedrigte Viskosität aufweisen, ermöglicht.

Die erfindungsgemäße Verwendung von löslichkeitsvermittelnden Kombinationen aus Verbindungen der Formel I oder II und Polystyrol bzw. Styrolcopolymerisat erfolgt gegebenenfalls vorzugsweise im Gewichtsverhältnis Formel I oder II-Verbindung : Polystyrol bzw. Styrolcopolymerisat = 99 : 1 bis 1 : 1, insbesondere 3 : 1 bis 1,5 : 1, und kann darüber hinaus dem jeweiligen an die Kombination gegebenenfalls zu stellenden Gesamtmengenerfordernis angepaßt werden.

Als Ausgangsprodukte für die erfindungsgemäß verwendeten plastifizierten PVB-e kommen alle bekannten und nach bekannten Methoden herstellbaren PVB-Typen infrage, die sich mit geeigneten üblichen Weichmachern plastifizieren lassen, z.B. durch thermoplastische Extrusion, und sich in plastifizierter Form thermoplastisch zu technisch verwendbaren Formkörpern, wie z.B. Flachfolien, die u.a. insbesondere als Zwischenlagenfolien zur Herstellung von Mehrschichtenverbundsicherheitsglasscheiben aus anorganischen Glasscheiben verwendbar sind, verarbeiten lassen.

Die hierfür vorzugsweise geeigneten Polyvinylbutyrale besitzen einen Gehalt an Vinylalkoholmonomereinheiten von vorzugsweise 15 bis 29 Gew.-%, insbesondere 18,5 bis 24 Gew.-%, besonders bevorzugt 19 bis 22 Gew.-%, sowie gegebenenfalls einen Gehalt an Vinylacetateinheiten von 1 bis 4 Gew.-%, jeweils bezogen auf das PVB. Die Viskosität der 5 gew.-%igen ethanolischen Lösungen der PVB-e (gemessen nach DIN 53015) bei 23 °C beträgt vorzugsweise 10 bis 200 mPa.s, insbesondere 50 bis 100 mPa.s.

Geeignet sind ferner plastifizierte Polyvinylacetale, die teilweise oder vollständig anstelle von Butyralresten aliphatische Acetalreste mit 1 bis 3 oder 5 bis 8 C-Atomen oder gegebenenfalls Reste aus Benzaldehyd enthalten, gegebenenfalls im Gemisch mit plastifiziertem PVB. Besonders bevorzugt sind jedoch plastifizierte PVB-e.

Als Weichmacher können alle mit PVB verträglichen und für dessen Plastifizierung geeigneten bekannten Weichmacher oder Weichmachergemische verwendet werden. Eine Aufstellung von handelsüblichen Weichmachern, die Angaben über deren Verträglichkeit mit PVB enthält, kann z.B. der Druckschrift Modern Plastics Encyclopedia 1981/1982, Seiten 710 bis 719, entnommen werden. Bevorzugte Weichmacher sind z.B. Diester von aliphatischen Diolen, insbesondere von aliphatischen Polyätherdiolen bzw. Polyätherpolyolen, mit aliphatischen Carbonsäuren, vorzugsweise Diester von Polyalkylenoxiden, insbesondere Diester des Di-, Tri- und Tetraethylenglykols mit aliphatischen (C₆-C₁₀)-Carbonsäuren, vorzugsweise 2-Ethylbuttersäure und n-Heptansäure, ferner Diester von aliphatischen oder aromatischen (C₂-C₁₈)-Dicarbonsäuren, vorzugsweise Adipin-, Sebazin- und Phthalsäure, mit aliphatischen (C₄-C₁₂)-Alkoholen, insbesondere Dihexyladipat. Besonders bevorzugte Weichmacher sind z.B. ferner Dioktyladipat, Dihexylphthalat, Dibutylphthalat, Triethylenglykol-di-fettsäureester, Tri- und Tetraethylenglykol-di-heptanoat, Triethylenglykol-di-(2-ethylbutanoat).

Die Weichmacher werden zur Plastifizierung von PVB in üblichen Mengen eingesetzt, die vorzugsweise im Bereich von 1 bis 50 Gew.-%, insbesondere 5 bis 45 Gew.-%, besonders bevorzugt 10 bis 30 Gew.-%, bezogen auf das PVB/Weichmacher-Gemisch, liegen können.

Die Herstellung von als Zwischenlagenfolien zur Verbundglasscheibenherstellung geeigneten und ausreichend plastifizierten PVB-Folien erfolgt bekanntlich vorzugsweise mittels thermoplastischer Extrusion durch Breitschlitzdüsen zu vorzugsweise 0,2 bis 2 mm dicken Flachfolien. Die Extrusionstemperatur der plastifizierten und stabilisierten Extrusionsformmassen liegt im üblichen Bereich, vorzugsweise zwischen 140 und 250 °C, wobei kurzzeitig auch höhere Temperaturen erreicht werden können. Die Herstellung von Flachfolien kann auch durch thermoplastische Verformung von stabilisierten plastifizierten PVB-Formmassen auf einem beheizbaren Dreiwalzenstuhl bzw. einem Kalander erfolgen.

Bevorzugt ist plastifiziertes handelsübliches PVB, wie es für die Herstellung von Zwischenlagenfolien für Mehrschichtenverbundglasscheiben aus anorganischen Glasscheiben verwendet wird. Besonders bevorzugt ist dieses Zwischenlagenfolienmaterial in Form von wohlfeilen plastifizierten PVB-Folienschnitzeln aus Recyclingverfahren für abgängige Verbundglasscheiben, insbesondere von zur Entsorgung anstehenden Scheiben aus Automobilen, die in speziellen Shredder-Anlagen in zunehmenden Mengen aufgearbeitet und in Glas und plastifizierte PVB-Folienschnitzel getrennt werden. Die letzteren sind in ihren Recyclingqualitäten als Verschnittmaterial zur erfindungsgemäßen Bitumenmodifikation hervorragend geeignet, wogegen sie z.B. zur Herstellung neuer Zwischenlagenfolien nicht mehr brauchbar sind.

Gegenstand der Erfindung sind daher modifizierte Bitumen mit verbesserten Elastizitätseigenschaften und verbesserter Kälteflexibilität, enthaltend Bitumen und eine polymere Elastifizierungskomponente in homogener Verteilung, dadurch gekennzeichnet, daß sie als Elastifizierungskomponente plastifiziertes Polyvinylbutyral (PVB) und als Löslichkeitsvermittler für letzteres eine zur Löslichkeitsvermittlung ausreichende Menge einer Verbindung der Formel I oder II,

R¹O-(CH₂-[CH₂]_{z}-O)ₓ-R² (I)

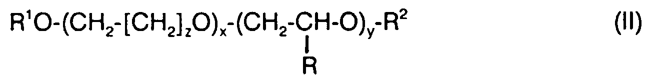

worin jeweils R¹ und R², die gleich oder verschieden sein können und vorzugsweise gleich sind, (C₁-C₄)-Alkyl, vorzugsweise Methyl oder Ethyl,
- R =: Methyl oder Ethyl, vorzugsweise Methyl,
- X =: jeweils eine Zahl von 1 bis 5000, vorzugsweise 3 bis 2500,
- Y =: eine Zahl von 0 bis 500, vorzugsweise 1 bis 200, mit der Maßgabe, daß bei y-Werten von >0 der Wert von x = 0 oder vorzugsweise ≥4 y ist, und
- Z =: eine Zahl von 1 bis 8, vorzugsweise 1 bis 3, insbesondere 1,
bedeuten,
oder Mischungen aus Verbindungen der Formeln I und II, gegebenenfalls in Kombination mit Polystyrol oder einem Styrolcopolymerisat als löslichkeitsvermittelnder Cokomponente enthalten.

Besonders bevorzugt sind Verbindungen der Formel I, vorzugsweise Verbindungen der Formel I mit z = 1 und x = 3 bis 10, insbesondere x = 4 bis 8.

Der Gehalt an plastifiziertem PVB in dem modifizierten Bitumen beträgt vorzugsweise 5 bis 60 Gew.-%, insbesondere 15 bis 30 Gew.-%, bezogen auf die Gesamtmenge aus Ausgangsbitumen und plastifiziertem PVB.

Der Gehalt an Löslichkeitsvermittlern der Formel I oder II bzw. gegebenenfalls deren Kombinationen mit der löslichkeitsvermittelnden Cokomponente Polystyrol oder Styrolcopolymerisat beträgt vorzugsweise 1 bis 30 Gew.-%, insbesondere 8 bis 25 Gew.-%, bezogen auf die Gesamtmenge des Gemisches aus Ausgangsbitumen und plastifiziertem PVB.

Bevorzugt sind Gehalte an löslichkeitsvermittelnden Kombinationen aus Verbindungen der Formel I oder II und der synergistisch löslichkeitsvermittelnd wirksamen Cokomponente Polystyrol bzw. Styrolcopolymerisat vorzugsweise im Gewichtsverhältnis von 99 : 1 bis 1 : 1, insbesondere 3 : 1 bis 1,5 : 1.

Der Weichmachergehalt in dem plastifizierten PVB, der vorzugsweise aus esterartigen Weichmachern besteht, liegt vorzugsweise im Bereich von 5 bis 45 Gew.-%, insbesondere 10 bis 30 Gew.-%, bezogen auf das PVB/Weichmacher-Gemisch.

Die in dem plastifizierten PVB enthaltenen Polyvinylbutyrale besitzen einen Gehalt an Vinylalkoholmonomereinheiten von vorzugsweise 15 bis 29 Gew.-%, insbesondere 18,5 bis 24 Gew.-%, besonders bevorzugt 19 bis 22 Gew.-%, sowie gegebenenfalls einen Gehalt an Vinylacetatmonomereinheiten von 1 bis 4 Gew.-%, jeweils bezogen auf das PVB. Die Viskosität der 5 gew.-%igen ethanolischen Lösungen der Polyvinylbutyrale (gemessen nach DIN 53015) bei 23 °C beträgt vorzugsweise 10 bis 200 mPa.s, insbesondere 50 bis 100 mPa.s.

Besonders bevorzugt sind plastifizierte PVB-Folienschnitzel aus plastifiziertem PVB-Verbundglaszwischenlagenfolienmaterial, wie sie aus Recyclingverfahren für abgängige Verbundglasscheiben, vorzugsweise aus Automobilen, in speziellen Shredder-Anlagen, die den plastifizierten PVB-Folienanteil von den Glasbestandteilen praktisch vollständig zu trennen vermögen, in zunehmendem Ausmaß erhalten werden können.

Den erfindungsgemäß modifizierten Bitumen liegen als Ausgangsbitumen vorzugsweise handelsübliche Destillationsbitumen, insbesondere der Typen B 15 bis B 300, mit Erweichungspunkten nach RuK von vorzugsweise 35 bis 75 °C, sowie vorzugsweise handelsübliche Blasbitumen mit Erweichungspunkten nach RuK von vorzugsweise 80 bis 140 °C, oder Gemische aus den genannten Bitumenqualitäten oder vergleichbare andere handelsübliche Bitumenqualitäten zugrunde.

Die Herstellung von erfindungsgemäß modifizierten Bitumen erfolgt vorzugsweise durch intensives Vermischen und Homogenisieren der Zusatzkomponenten bei erhöhten Temperaturen in dem geschmolzenen Ausgangsbitumen. Die Herstellung erfindungsgemäßer homogener und stippenarmer bzw. stippenfreier Gemische kann vorzugsweise in handelsüblichen beheizbaren Zwangsmischern bzw. Knetern, vorzugsweise solchen mit Planetengetriebe und starker Scherkraftwirkung, durchgeführt werden. Hierbei wird in einer bevorzugten Verfahrensvariante das Ausgangsbitumen vorgelegt, aufgeschmolzen und auf Temperaturen von vorzugsweise > 150 °C bis zu 300 °C, insbesondere 200 bis 260 °C, besonders bevorzugt auf 250 °C, aufgeheizt. Unter guter Durchmischung wird der aufgeheizten Bitumenschmelze der vorgesehene Anteil an plastifiziertem PVB zugesetzt und das Gemisch geknetet. Anschließend wird bei der gleichen Temperatur die erforderliche Menge Löslichkeitsvermittler zugesetzt und die Mischung bis zur vollständigen Homogenität der Masse nachgeknetet und anschließend auf Raumtemperatur gebracht, wobei sie erstarrt. Das resultierende modifizierte Bitumen ist hiernach sogleich verwendungsfähig und ist in seiner festen Form erheblich elastischer und kerbschlagzäher und besitzt eine verbesserte Kälteflexibilität, vergleichsweise zum entsprechenden Eigenschaftsbild des nichtmodifizierten jeweiligen Ausgangsbitumens.

Die Verbesserung des Elastizitätsverhaltens und der Kälteflexibilität des modifizierten Bitumens steigt unter vergleichbaren Modifizierungsbedingungen mit zunehmendem Gehalt an plastifiziertem PVB an.

Eine weitere bevorzugte Verfahrensvariante besteht darin, daß man zunächst ein Gemisch bzw. ein granuliertes Blend aus plastifiziertem PVB und dem Löslichkeitsvermittler bzw. der Löslichkeitsvermittlerkombination herstellt und dieses Blend dann in die aufgeheizte Ausgangsbitumenschmelze bei der angegebenen Mischtemperatur, vorzugsweise im Bereich von 150 bis 300 °C, insbesondere 200 bis 260 °C, besonders bevorzugt bei 250 °C, unter Rühren einträgt, die Mischung durch intensives Vermischen und Kneten homogenisiert und anschließend auf Raumtemperatur erkalten läßt oder unmittelbar in geschmolzener Form einer vorgesehenen Verwendung zuführt.

Bei der Verwendung von Löslichkeitsvermittlerkombinationen mit Gehalten an Polystyrol als Cokomponente ist die Verwendung von Schaumpolystyrol oder Polystyrolhartschaum bevorzugt. Besonders bevorzugt ist die Verwendung von recyclingfähigen Abfallschaumpolystyrolqualitäten, wie sie in Industrieländern in großen Mengen aus verbrauchten Verpackungs- und Isoliermaterialien und aus aufbereitetem Bauschutt anfallen.

Als Elastifizierungskomponente ist die Verwendung von plastifiziertem PVB, vorzugsweise aus Zwischenlagenfolienmaterial für Verbundglasscheiben, insbesondere in Recyclingmaterialqualität, vorzugsweise in Folienschnitzelform, besonders bevorzugt.

Weiterer Gegenstand der Erfindung ist daher ein Verfahren zur Herstellung von modifiziertem Bitumen mit verbesserten Elastizitätseigenschaften und verbesserter Kälteflexibilität, enthaltend Bitumen, plastifiziertes Polyvinylbutyral (PVB) als Elastifizierungskomponente und als Löslichkeitsvermittler Mono-, Oligo- oder Polyalkylenglykoldialkyläther der vorstehend spezifizierten Formel I oder II, gegebenenfalls in Kombination mit Polystyrol oder Styrolcopolymerisat als löslichkeitsvermittelnder Cokomponente, in homogener Mischung, dadurch gekennzeichnet, daß man in einer beheizbaren Mischapparatur das Ausgangsbitumen vorlegt und auf eine Temperatur im Bereich von 150 bis 300 °C, vorzugsweise 200 bis 260 °C, insbesondere auf 250 °C, erhitzt, in die Bitumenschmelze unter guter Durchmischung und Kneten mit starker Scherkraftwirkung plastifiziertes PVB einträgt, anschließend den Löslichkeitsvermittler und gegebenenfalls die löslichkeitsvermittelnde Cokomponente zusetzt, die Mischung bei der gleichen Temperatur durch weiteres intensives Kneten und Durchmischen homogenisiert und die homogene Schmelze auf Normaltemperatur abkühlen läßt oder in geschmolzener Form einer direkten Verwendung zuführt.

Eine bevorzugte Variante dieses Verfahrens besteht darin, daß man der vorgelegten Ausgangsbitumenschmelze bei der oben angegebenen Temperatur ein granuliertes Blend, bestehend aus plastifiziertem PVB, dem Löslichkeitsvermittler und gegebenenfalls der löslichkeitsvermittelnden Cokomponente, zusetzt und die Mischung bei der gleichen Temperatur durch intensives Kneten und Durchmischen mit starker Scherkraftwirkung homogenisiert und die homogene Schmelze auf Normaltemperatur abkühlen läßt oder in geschmolzener Form einer direkten Verwendung zuführt.

Die Menge an eingesetztem plastifiziertem PVB beträgt vorzugsweise 5 bis 60 Gew.-%, insbesondere 15 bis 30 Gew.-%, bezogen auf die Gesamtmenge aus Ausgangsbitumen und plastifiziertem PVB.

Die Menge an eingesetztem Löslichkeitsvermittler bzw. dessen Kombinationen mit der löslichkeitsvermittelnden Cokomponente beträgt vorzugsweise 1 bis 30 Gew.-%, insbesondere 8 bis 25 Gew.-%, bezogen auf die Gesamtmenge des Gemisches aus Ausgangsbitumen und plastifiziertem PVB.

Das Gewichtsverhältnis von Löslichkeitsvermittler und löslichkeitsvermittelnder Cokomponente beträgt vorzugsweise 99:1 bis 1:1, insbesondere 3:1 bis 1,5:1.

Als Ausgangsbitumen werden vorzugsweise handelsübliches Destillationsbitumen oder handelsübliches Blasbitumen oder Gemische aus diesen Bitumen oder vergleichbare andere handelsübliche Bitumenqualitäten eingesetzt.

Als plastifiziertes PVB wird vorzugsweise plastifiziertes handelsübliches PVB oder plastifiziertes PVB aus Verbundglasscheiben, vorzugsweise in Recyclingqualität, eingesetzt. Der Weichmachergehalt in dem plastifizierten PVB beträgt vorzugsweise 5 bis 45 Gew.-%, insbesondere 10 bis 30 Gew.-%. Der Weichmachergehalt besteht vorzugsweise aus Estergruppen enthaltenden üblichen PVB-Weichmachern.

Als Löslichkeitsvermittler wird vorzugsweise Tetraethylenglykoldimethyläther und als löslichkeitsvermittelnde Cokomponente vorzugsweise Schaumpolystyrol, insbesondere recyclingfähiges Abfallschaumpolystyrol, eingesetzt.

Die erfindungsgemäß hergestellten modifizierten Bitumen besitzen deutlich verbesserte Elastizitätseigenschaften und deutlich verbesserte Kälteflexibilitäten, vergleichsweise zu den verwendeten Ausgangsbitumen. Die erfindungsgemäß modifizierten Bitumen sind insbesondere auf allen technischen Gebieten einsetzbar, wo bisher nach herkömmlichen Methoden elastifizierte Bitumen eingesetzt bzw. benötigt werden. Bevorzugte Einsatzgebiete sind z.B. die Herstellung von Straßenbaumaterial, vorzugsweise in Kombination mit Schotter, Gesteinssplitt, Kies, Sand, Gesteinsmehl, Schlackenmaterial, ferner die Herstellung von Stampfasphalt, Asphaltbeton und Walzasphalt für Fahrbahndecken, Vergußmassen für Dehnungsfugen von Betonstraßen und Betonbauwerken, Vergußmassen für die Elektrotechnik, Isoliermassen für Stahl- und Betonröhrenummantelungen und Pipelineröhren, Antidröhnmassen für Fahrzeuge und Maschinen, Steinschlagschutz und Unterbodenschutz für Fahrzeugenkarossen, Dichtungsbahnen, Dachabdichtungsbahnen, lsolierschweißbahnen, Dachpappen etc.

Die Erfindung wird durch die nachstehenden Beispiele näher erläutert.

### Beispiel 1

In einer flüssigkeitsbeheizten Kneterapparatur mit Planetengetriebe und starker Scherkraftwirkung werden 160 g handelsübliches Blasbitumen (Hersteller: Shell AG) mit einem Erweichungspunkt nach RuK von 100 °C und einer Penetration bei 25 °C von 25 [1/10 mm] vorgelegt und auf 250 °C erwärmt. Bei ständig laufenden Knetwerkzeugen werden der Bitumenschmelze sodann bei 250 °C portionsweise 100 g plastifizierte PVB-Folienschnitzel von Recyclingqualität aus Verbundglasscheiben zugesetzt und die Mischung während 20 Minuten intensiv geknetet, wobei eine heterogene Schmelze erhalten wird. Anschließend werden der heterogenen Schmelze 10 g Tetraethylenglykoldimethyläther als Löslichkeitsvermittler zugesetzt und die Mischung bei 250 °C weitere 20 Minuten geknetet, wobei eine homogene und stippenfreie Produktschmelze erhalten wird, die beim Abkühlen auf Normaltemperatur zu einem homogenen und stippenfreien Festkörper erstarrt und eine vorteilhaft modifizierte Bitumenqualität darstellt, die bei -18 °C bei einem manuellen Schlageinwirkungstest mittels eines 300 g schweren Hammers (5 aufeinanderfolgende Hammerschläge auf den auf einer Metallplatte aufliegenden Bitumenprüfkörper) nicht zerbricht und nicht zersplittert, im Gegensatz zum eingesetzten und zersplitternden Ausgangsblasbitumen, sondern eine hohe Elastizität, Zähigkeit und Kälteflexibilität zeigt, die dem Produkt interessante Verwendungsmöglichkeiten eröffnen.

### Beispiel 2

Beispiel 1 wird wiederholt mit der Abänderung, daß anstelle des Blasbitumens die gleiche Menge handelsübliches Destillationsbitumen, Typ B 200 (Hersteller: Shell AG), mit einem Erweichungspunkt nach RuK von 40 °C und einer Penetration bei 25 °C von 200 [1/10 mm] verwendet wird. Ansonsten wird analog wie in Beispiel 1 beschrieben verfahren. Es wird eine homogene und stippenfreie Produktschmelze erhalten, die beim Abkühlen auf Normaltemperatur zu einem homogenen und stippenfreien Festkörper erstarrt und eine vorteilhaft modifizierte Bitumenqualität darstellt. Bei dem manuellen Schlageinwirkungstest mittels eines Hammers bei -18 °C zeigt das Produkt weder einen Bruch noch eine Zersplitterung, im Gegensatz zu dem verwendeten und zersplitternden Ausgangsdestillationsbitumen.

### Beispiel 3

Beispiel 1 wird wiederholt mit der Abänderung, daß zusätzlich zu dem dort verwendeten Löslichkeitsvermittler zusammen mit dem letzteren der Schmelze noch 12 g Schaumpolystyrol (Styropor von Recyclingqualität aus Verpackungsmaterialien) als löslichkeitsvermittelnde Cokomponente zugesetzt werden mit dem Ergebnis, daß die Homogenität in der Schmelze bereits nach deutlich kürzerer Knetzeit eintritt und die resultierende homogene und stippenfreie Schmelze außerdem eine erheblich niedrigere Viskosität als die Schmelze des Beispiels 1 besitzt, was die Herstellung und Verarbeitung des resultierenden modifizierten Bitumens begünstigt. Bei dem manuellen Schlageinwirkungstest mittels eines Hammers bei -18 °C zeigt das resultierende modifizierte feste Bitumen weder einen Bruch noch eine Absplitterung, vergleichsweise zum eingesetzten nichtmodifizierten und zersplitternden Ausgangsblasbitumen.

### Beispiel 4

Beispiel 1 wird wiederholt mit der Abänderung, daß statt 10 g nur 5 g Tetraethylenglykoldimethyläther als Löslichkeitsvermittler und zusätzlich 12 g Schaumpolystyrol (Styropor von Recyclingqualität aus Verpackungsmaterialien) als löslichkeitsvermittelnde Cokomponente zugesetzt werden mit dem Ergebnis, daß die Homogenität in der Schmelze bereits nach kürzerer Knetzeit als in Beispiel 1 eintritt und die resultierende homogene und stippenfreie Schmelze außerdem eine niedrigere Viskosität als die Schmelze des Beispiels 1 besitzt, was die Herstellung und Verarbeitung des resultierenden modifizierten Bitumens begünstigt. Bei dem manuellen Schlageinwirkungstest mittels eines Hammers bei -18 °C zeigt das resultierende modifizierte feste Bitumen weder einen Bruch noch eine Absplitterung, vergleichsweise zum eingesetzten nichtmodifizierten und zersplitternden Ausgangsblasbitumen.

### Beispiel 5

Beispiel 1 wird wiederholt mit der Abänderung, daß statt 10 g nur 5 g Tetraethylenglykoldimethyläther als Löslichkeitsvermittler und keine zusätzliche Schaumpolystyrol-Cokomponente zugesetzt werden. Dabei wird am Versuchsende ebenfalls eine vorteilhaft modifizierte, jedoch nicht völlig stippenfreie Bitumenqualität mit vorteilhaften Elastizitätsmerkmalen (z.B. bruchfreier manueller Hammerschlagtest bei -18 °C, vergleichsweise zum nicht modifizierten und zersplitternden Ausgangsbitumen) erhalten.

## Patentansprüche

1. Modifizierte Bitumen mit verbesserten Elastizitätseigenschaften und verbesserter Kälteflexibilität, enthaltend Bitumen und eine polymere Elastifizierungskomponente in homogener Verteilung, dadurch gekennzeichnet, daß sie als Elastifizierungskomponente plastifiziertes Polyvinylbutyral (PVB) und als Löslichkeitsvermittler für letzteres eine zur Löslichkeitsvermittlung ausreichende Menge einer Verbindung der Formel I oder II,
R¹O-(CH₂-[CH₂]_{z}-O)ₓ-R² (I) 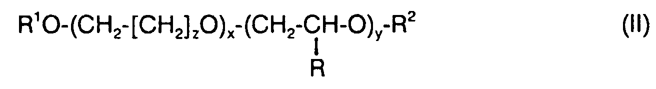
worin jeweils R¹ und R², die gleich oder verschieden sein können (C₁-C₄)-Alkyl,
R = Methyl oder Ethyl,
x = jeweils eine Zahl von 1 bis 5000,
y = eine Zahl von 0 bis 500, mit der Maßgabe, daß bei y-Werten von >0 der Wert von x = 0, und
z = eine Zahl von 1 bis 8,
bedeuten,
oder Mischungen aus Verbindungen der Formeln I und II, gegebenenfalls in Kombination mit Polystyrol oder einem Styrolcopolymerisat als löslichkeitsvermittelnder Cokomponente enthalten.

2. Modifizierte Bitumen nach Anspruch 1, dadurch gekennzeichnet, daß deren Gehalt an plastifiziertem PVB 5 bis 60 Gew.-%, bezogen auf die Gesamtmenge aus Ausgangsbitumen und plastifiziertem PVB, beträgt.

3. Modifizierte Bitumen nach Anspruch 1 oder 2, dadurch gekennzeichnet, daß der Weichmachergehalt in dem plastifizierten PVB aus esterartigen Weichmachern besteht und im Bereich von 5 bis 45 Gew.-%, bezogen auf das PVB/Weichmacher-Gemisch, liegt.

4. Modifizierte Bitumen nach einem oder mehreren der Ansprüche 1 bis 3, dadurch gekennzeichnet, daß die in dem plastifizierten PVB enthaltenen Polyvinylbutyrale einen Gehalt an Vinylalkoholmonomereinheiten von 15 bis 29 Gew.-%, sowie gegebenenfalls einen Gehalt an Vinylacetatmonomereinheiten von 1 bis 4 Gew.-%, jeweils bezogen auf das PVB, aufweisen und die Viskosität der 5 gew.-%igen ethanolischen Lösungen der Polyvinylbutyrale (gemessen nach DIN 53015) bei 23 °C 10 bis 200 mPa.s, beträgt.

5. Modifizierte Bitumen nach einem oder mehreren der Ansprüche 1 bis 4, dadurch gekennzeichnet, daß sie als plastifiziertes PVB plastifiziertes PVB-Verbundglaszwischenlagenfolienmaterial aus Recyclingverfahren für abgängige Verbundglasscheiben, enthalten.

6. Modifizierte Bitumen nach einem oder mehreren der Ansprüche 1 bis 5, dadurch gekennzeichnet, daß sie als Ausgangsbitumen handelsübliche Destillationsbitumen, mit Erweichungspunkten nach RuK von 35 bis 75 °C, oder handelsübliche Blasbitumen mit Erweichungspunkten nach RuK von 80 bis 140 °C, oder Gemische aus den genannten Bitumenqualitäten oder vergleichbare andere handelsübliche Bitumenqualitäten enthalten.

7. Modifizierte Bitumen nach einem oder mehreren der Ansprüche 1 bis 6, dadurch gekennzeichnet, daß ihr Gehalt an Löslichkeitsvermittlern der Formel I oder II bzw. gegebenenfalls deren Kombinationen mit der löslichkeitsvermittelnden Cokomponente Polystyrol oder Styrolcopolymerisat, 1 bis 30 Gew.-%, bezogen auf die Gesamtmenge des Gemisches aus Ausgangsbitumen und plastifiziertem PVB, beträgt.

8. Modifizierte Bitumen nach einem oder mehreren der Ansprüche 1 bis 7, dadurch gekennzeichnet, daß ihr Gehalt an löslichkeitsvermittelnden Kombinationen aus Verbindungen der Formel I oder II und der synergistisch löslichkeitsvermittelnd wirksamen Cokomponente Polystyrol bzw. Styrolcopolymerisat im Gewichtsverhältnis von 99 : 1 bis 1 : 1, vorliegt.

9. Modifizierte Bitumen nach einem oder mehreren der Ansprüche 1 bis 8, dadurch gekennzeichnet, daß sie als Löslichkeitsvermittler Verbindungen der Formel I enthalten, wobei in Formel I z = 1 und x = 3 bis 10, bedeutet, insbesondere Tetraethylenglykoldimethyläther.

10. Verfahren zur Herstellung von modifiziertem Bitumen mit verbesserten Elastizitätseigenschaften und verbesserter Kälteflexibilität nach Ansprüchen 1 bis 9, enthaltend Bitumen, plastifiziertes Polyvinylbutyral (PVB) als Elastifizierungskomponente und als Löslichkeitsvermittler Mono-, Oligo- oder Polyalkylenglykoldialkyläther der Formel I oder II, gegebenenfalls in Kombination mit Polystyrol oder Styrolcopolymerisat als löslichkeitsvermittelnder Cokomponente, in homogener Mischung, dadurch gekennzeichnet, daß man in einer beheizbaren Mischapparatur das Ausgangsbitumen vorlegt und auf eine Temperatur im Bereich von 150 bis 300 °C, erhitzt, in die Bitumenschmelze unter guter Durchmischung und Kneten mit starker Scherkraftwirkung plastifiziertes PVB einträgt, anschließend den Löslichkeitsvermittler und gegebenenfalls die löslichkeitsvermittelnde Cokomponente zusetzt, die Mischung bei der gleichen Temperatur durch weiteres intensives Kneten und Durchmischen homogenisiert und die homogene Schmelze auf Normaltemperatur abkühlen läßt oder in geschmolzener Form einer direkten Verwendung zuführt.

11. Verwendung von modifizierten Bitumen mit verbesserten Elastizitätseigenschaften und verbesserter Kälteflexibilität nach Ansprüchen 1 bis 9 bzw. hergestellt nach Anspruch 10 zur Herstellung von Straßenbaumaterial, ferner zur Herstellung von Stampfasphalt, Asphaltbeton und Walzasphalt für Fahrbahndecken, Vergußmassen für Dehnungsfugen von Betonstraßen und Betonbauwerken, Vergußmassen für die Elektrotechnik, Isoliermassen für Stahl- und Betonröhrenummantelungen und Pipelineröhren, Antidröhnmassen für Fahrzeuge und Maschinen, Steinschlagschutz und Unterbodenschutz für Fahrzeugenkarossen, Dichtungsbahnen, Dachabdichtungsbahnen, Isolierschweißbahnen und Dachpappen.

## Claims

1. Modified bitumens having improved elasticity properties and an improved low-temperature flexibility, comprising bitumen and a polymeric elasticizing component in homogeneous distribution, caracterized in that they comprise, as the elasticizing component, plasticized polyvinyl butyral (PVB) and, as the solubilizing agent for the latter, an amount, sufficient for solubilization, of a compound of the formula I or II
R¹O-(CH₂-[CH₂]_{z}-O)ₓ-R² (I) 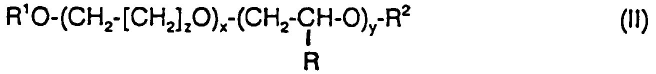
in which in each case
R¹ and R², which can be identical or different, are (C₁-C₄) -alkyl,
R is methyl or ethyl,
x is in each case a number from 1 to 5000,
y is a number from 0 to 500, with the proviso that at y values of >0, the value of x is 0, and
z is a number from 1 to 8,
or mixtures of compounds of the formulae I and II, if appropriate in combination with polystyrene or a styrene copolymer as the solubilizing co-component.

2. Modified bitumens as claimed in claim 1, characterized in that the content of plasticized PVB is 5 to 60 % by weight, based on the total amount of starting bitumen and plasticized PVB.

3. Modified bitumens as claimed in claim 1 or 2, characterized in that the plasticizer content in the plasticized PVB comprises ester-like plasticizers and is in the range from 5 to 45 % by weight, based on the PVB/plasticizer mixture.

4. Modified bitumens as claimed in one or more of claims 1 to 3, characterized in that the polyvinyl butyrals contained in the plasticized PVB have a content of vinyl alcohol monomer units of 15 to 29 % by weight, and if appropriate a content of vinyl acetate monomer units of 1 to 4 % by weight, in each case based on the PVB, and the viscosity of the 5 % strength by weight ethanolic solution of the polyvinyl butyral (measured in accordance with DIN 53015) at 23°C is 10 to 200 mPa.s.

5. Modified bitumens as claimed in one or more of claims 1 to 4, characterized in that they comprise, as the plasticized PVB, plasticized PVB film material used as an interlayer for laminated glass and obtained from recycling processes for waste panes of laminated glass.

6. Modified bitumens as claimed in one or more of claims 1 to 5, characterized in that they comprise, as the starting bitumens, commercially available distillation bitumens having R & B softening points of 35 to 75°C, or commercially available blown bitumens having R & B softening points of 80 to 140°C, or mixtures of the bitumen grades mentioned, or other comparable commercially available bitumen grades.

7. Modified bitumens as claimed in one or more of claims 1 to 6, characterized in that their content of solubilizing agents of the formula I or II or, if appropriate, combinations thereof with the solubilizing co-component polystyrene or styrene copolymer, is 1 to 30 % by weight, based on the total amount of the mixture of starting bitumen and plasticized PVB.

8. Modified bitumens as claimed in one or more of claims 1 to 7, characterized in that their content of solubilizing combinations of compounds of the formula I or II and the synergistic solubilizing co-component polystyrene or styrene copolymer is present in a weight ratio of 99:1 to 1:1.

9. Modified bitumens as claimed in one or more of claims 1 to 8, characterized in that they comprise, as the solubilizing agents, compounds of the formula I whereby, in formula I, z = 1 and x = 3 to 10, in particular tetraethylene glycol dimethyl ether.

10. A process for the preparation of modified bitumens having improved elasticity properties and an improved low-temperature flexibility, as claimed in claims 1 to 9, comprising bitumen, plasticized polyvinyl butyral (PVB) as the elasticizing component and, as the solubilizing agent, mono-, oligo- or polyalkylene glycol dialkyl ethers of the formula I or II, if appropriate in combination with polystyrene or a styrene copolymer as a solubilizing co-component, in a homogeneous mixture, characterized in that the starting bitumen is initially introduced into a heatable mixing apparatus and is heated to a temperature in the range from 150 to 300°C, plasticized PVB is introduced into the bitumen melt with good thorough mixing and kneading with a powerful shearing force action, subsequently the solubilizing agent and if appropriate the solubilizing co-component are added, the mixture is homogenized by further intensive kneading and thorough mixing at the same temperature, and the homogeneous melt is allowed to cool down to normal temperature or it is used directly in the molten form.

11. The use of modified bitumens having improved elasticity properties and an improved low-temperature flexibility, as claimed in claims 1 to 9 or prepared as claimed in claim 10, for the production of road construction material, and furthermore for the production of compressed asphalt, asphalt concrete and rolled asphalt for road surfaces, casting compositions for expansion joints of concrete roads and concrete buildings, casting compositions for electrical engineering, insulating compositions for sheathings for steel and concrete pipes and pipelines, anti-noise compositions for vehicles and machinery, protection from stone chips and underbody protection for vehicle bodies, damp-proofing, roof sealing, insulating waterproof sheeting and roofing felts.

## Revendications

1. Bitume modifié ayant des propriétés d'élasticité améliorées et une meilleure flexibilité à froid, contenant du bitume et un constituant élastifiant polymère réparti de façon homogène, caractérisé en ce qu'il contient comme constituant élastifiant un polyvinylbutyral (PVB) plastifié et comme agent de solubilisation pour ce dernier une quantité suffisante pour la solubilisation d'un composé de formule I ou II
R¹O-(CH₂-[CH₂]_{z}-O)ₓ-R² (I) 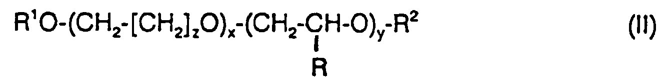
où
R¹ et R², qui peuvent être identiques ou différents, représentent chacun un reste alkyle en C₁-C₄,
R est un reste méthyle ou éthyle,
x est dans chaque cas un nombre compris entre 1 et 5000,
y est un nombre compris entre 0 et 500, à condition que, lorsque y est > 0, la valeur de x soit égale à 0, et
z est un nombre compris entre 1 et 8,
ou des mélanges de composés de formule I et II, éventuellement en combinaison avec un polystyrène ou un copolymère du styrène comme co-constituant solubilisant.

2. Bitume modifié selon la revendication 1, caractérisé en ce que sa teneur en PVB plastifié est de 5 à 60 % en masse par rapport à la quantité totale de bitume de départ et de PVB plastifié.

3. Bitume modifié selon la revendication 1 ou 2, caractérisé en ce que le PVB plastifié contient comme plastifiant des plastifiants de type ester en une quantité comprise entre 5 et 45 % en masse par rapport au mélange PVB/plastifiant.

4. Bitume modifié selon l'une ou plusieurs des revendications 1 à 3, caractérisé en ce que les polyvinylbutyrals contenus dans le PVB plastifié ont une teneur en unités monomères alcool vinylique de 15 à 29 % en masse et éventuellement une teneur en unités monomères acétate de vinyle de 1 à 4 % en masse, toujours par rapport au PVB, et la viscosité de solutions éthanoliques à 5 % en masse des polyvinylbutyrals (mesurée selon la norme DIN 53015) à 23°C est comprise entre 10 et 200 mPa.s.

5. Bitume modifié selon l'une ou plusieurs des revendications 1 à 4, caractérisé en ce qu'il contient comme PVB plastifié un matériau de feuilles intermédiaires en PVB plastifié de verre feuilleté provenant d'opérations de recyclage de plaques de verre feuilleté mises au rebut.

6. Bitume modifié selon l'une ou plusieurs des revendications 1 à 5, caractérisé en ce qu'il contient comme bitume de départ un bitume de distillation commercial, ayant un point de ramollissement, selon le procédé de la bille et de l'anneau, compris entre 35 et 75°C, ou un bitume soufflé commercial ayant un point de ramollissement, selon le procédé de la bille et de l'anneau, compris entre 80 et 140°C, ou des mélanges des qualités de bitume précitées ou d'autres qualités de bitume commerciales comparables.

7. Bitume modifié selon l'une ou plusieurs des revendications 1 à 6, caractérisé en ce que sa teneur en agents de solubilisation de formule I ou II ou éventuellement leurs combinaisons avec le co-constituant solubilisant polystyrène ou copolymère de styrène est de 1 à 30 % en masse par rapport à la quantité totale du mélange de bitume de départ et de PVB plastifié.

8. Bitume modifié selon l'une ou plusieurs des revendications 1 à 7, caractérisé en ce qu'il contient une combinaison de composés de formule I ou II et du co-constituant à effet solubilisant synergique polystyrène ou copolymère de styrène dans un rapport en masse de 99:1 à 1:1.

9. Bitume modifié selon l'une ou plusieurs des revendications 1 à 8, caractérisé en ce qu'il contient comme agent de solubilisation des composés de formule I dans laquelle z = 1 et x = 3 à 10, en particulier de l'éther diméthylique de tétraéthylèneglycol.

10. Procédé de préparation de bitume modifié ayant des propriétés d'élasticité et une flexibilité à froid améliorées selon les revendications 1 à 9, contenant en un mélange homogène du bitume, du polyvinylbutyral (PVB) plastifié comme constituant élastifiant et, comme agents de solubilisation, des éthers dialkyliques de mono-, oligo- ou polyalkylèneglycols de formule I ou II, éventuellement en combinaison avec du polystyrène ou un copolymère de styrène comme co-constituant solubilisant, caractérisé en ce que l'on introduit le bitume de départ dans un appareil de mélange chauffant et on le chauffe à une température comprise entre 150 et 300°C, on introduit du PVB plastifié dans le bitume fondu, en mélangeant bien et en malaxant avec un fort effet de cisaillement, puis on ajoute l'agent de solubilisation et éventuellement le co-constituant solubilisant, on homogénéise le mélange à la même température en continuant à malaxer et à mélanger intensivement et on laisse refroidir le mélange fondu homogène ou on l'utilise directement sous forme fondue.

11. Utilisation de bitume modifié ayant des propriétés d'élasticité et une flexibilité à froid améliorées selon les revendications 1 à 9 ou préparé selon la revendication 10 pour la production de matériaux routiers ou pour la production d'asphalte comprimé, de béton d'asphalte et d'asphalte à cylindrer pour des revêtements de routes, de masses de scellement pour des joints de dilatation de routes en béton et de bâtiments en béton, de masses de scellement pour l'électrotechnique, de compositions d'isolation pour des gaines de tuyaux en acier et en béton et des tuyaux d'oléoducs, de matières antivrombissantes pour des véhicules et des machines, de couches antigravillonnage et de protection de bas de caisse pour des carrosseries automobiles, de panneaux d'étanchéité, de panneaux d'étanchéité de toit, de panneaux bitumineux d'isolation et de cartons goudronnés pour toiture.
